# EUROPÄISCHE PATENTSCHRIFT

(11) **EP 2 100 927 B1**
(45) Veröffentlichungstag und Bekanntmachung des Hinweises auf die Patenterteilung: **17.08.2016**
(21) Anmeldenummer: 09008230.6
(22) Anmeldetag: 06.04.2005
(51) Int. Cl.: C09C 1/36, C01G 23/047, B01J 21/06, B01J 35/00

(54) **Kohlenstoffhaltiger Titandioxid-Photokatalysator und Verfahren zu seiner Herstellung**
Carbon-containing titanium dioxide photocatalyst and process the production thereof
Photocatalyseur à base de dioxyde de titane contenant du carbone et son procédé de fabrication

(30) Priorität: 07.04.2004 DE 102004017565; 07.04.2004 DE 202004005677 U; 04.06.2004 DE 102004027549
(43) Veröffentlichungstag der Anmeldung: 16.09.2009
(62) Teilanmeldung aus: 05769797.1
(73) Patentinhaber: KRONOS INTERNATIONAL, INC., 51373 Leverkusen (DE)
(72) Erfinder: Orth-Gerber, Jürgen, Dr., 55278 Undenheim (DE); Kisch, Horst, Prof., Dr., 91054 Erlangen (DE); Sakthivel, Shanmugasundaram, Dr., 66121 Saarbrücken (DE)

(56) Entgegenhaltungen:
- EP-A- 0 498 122
- EP-A- 0 963 789
- EP-A- 1 285 953
- DE-A1- 10 044 986
- GB-A- 1 022 621
- PATENT ABSTRACTS OF JAPAN Bd. 2000, Nr. 03, 30. März 2000 (2000-03-30) & JP 11 333304 A (KANKYO DEVICE KENKYUSHO:KK), 7. Dezember 1999 (1999-12-07)

## Beschreibung

Die Erfindung betrifft einen kohlenstoffhaltigen Photokatalysator auf der Basis von Titandioxid, der im sichtbaren Bereich photoaktiv ist, im folgenden auch vlp-TiO₂ genannt.

Die Erfindung betrifft weiterhin ein Verfahren zur Herstellung eines kohlenstoffhaltigen Titandioxids (vlp-TiO₂), das bei Bestrahlung mit sichtbarem Licht als Photokatalysator wirksam ist.

Photokatalytische Materialien sind Halbleiter, bei denen unter Lichteinwirkung Elektron-Loch-Paare entstehen, welche an der Materialoberfläche hochreaktive freie Radikale erzeugen. Titandioxid ist ein solcher Halbleiter. Es ist bekannt, dass Titandioxid natürliche und artifizielle Verunreinigungen in Luft und Wasser durch Bestrahlen mit UV-Licht entfernen kann, indem der Luftsauerstoff reduziert und die Verunreinigungen zu umweltfreundlichen Endprodukten oxidiert (mineralisiert) werden. Zusätzlich wird die Oberfläche von Titandioxid durch Absorption von UV-Licht superhydrophil. Darauf beruht der Antibeschlageffekt dünner Titandioxidfilme auf Spiegeln und Fenstern.

Ein gravierender Nachteil von Titandioxid ist die Tatsache, dass es nur den UV-Anteil des Sonnenlichts, d.h. nur 3 bis 4 % der Strahlung, nutzen kann und im diffusen Tageslicht entweder gar nicht oder nur sehr schwach katalytisch aktiv ist.
Man versucht deswegen seit längerem, Titandioxid so zu modifizieren, dass es auch den Hauptanteil des photochemisch wirksamen Sonnenlichts - das sichtbare Spektralgebiet von etwa 400 bis etwa 700 nm - zur Erzeugung der genannten Phänomene nutzen kann.

Ein Weg, TiO₂ für Tageslicht photokatalytisch aktiv zu machen, ist die Dotierung mit Metallionen wie V, Pt, Cr, Fe usw. Eine andere Möglichkeit ist die Erzeugung von Sauerstoff-Leerstellen im TiO₂-Kristallgitter durch Reduktion des Ti⁴⁺. Beide Entwicklungen erfordern aufwändige Herstellungstechniken wie Ionenimplantation oder Plasmabehandlung. Zahlreiche Patente beschreiben Stickstoff-modifiziertes Titandioxid, das bei Bestrahlung im sichtbaren Bereich photokatalytisch wirksam ist (z.B. EP 1 178 011 A1, EP 1 254 863 A1).

Darüber hinaus ist bekannt, dass durch Modifizierung mit Kohlenstoff die photokatalytische Aktivität des Titandioxids bei Bestrahlung mit sichtbarem Licht ansteigt. Beispielsweise wird in der JP 11333304 A ein Titandioxid beschrieben, dessen Oberfläche zumindest teilweise einen Niederschlag von Graphit, amorphem Kohlenstoff, diamantartigem Kohlenstoff oder Kohlenwasserstoffen aufweist. Die EP 0 997 191 A1 berichtet über ein Titandioxid, auf dessen Oberfläche Titancarbid mittels Gasphasenabscheidung aufgebracht wurde. Photokatalytische Materialien, bei denen Titandioxid u.a. Stickstoff, Schwefel, Kohlenstoff oder andere Elemente als Anion enthält, werden beispielsweise in der EP 1 205 244 A1 und der EP 1 205 245 A1 offenbart. Die Anionen sollen sich entweder auf Sauerstoffplätzen, auf Zwischengitterplätzen oder an den Korngrenzen eines polykristallinen Titanoxidteilchens befinden. Es werden keine Angaben über die Charakterisierung des Materials oder über katalytische oder physikalische Eigenschaften gemacht.
Es ist weiter bekannt, aus Titanalkoholaten durch Hydrolyse mit Salzsäure und nachfolgendes Erhitzen auf 350 °C Titandioxid herzustellen, welches 1,0 bis 1,7 Gew.-% Kohlenstoff enthält (C. Lettmann et al., Applied Catalysis B 32 (2001) 215). Der Kohlenstoff stammt hier von dem Liganden der Titanverbindung.
Gemäß einer weiteren Veröffentlichung wurde gefunden, dass die Hydrolyse von Titantetrachlorid mit Tetrabutylammoniumhydroxid, gefolgt von einstündigem Calzinieren bei 400 °C ein Titandioxidpräparat ergibt, welches 0,42 Gew.-% Kohlenstoff enthält (S. Sakthivel & H. Kisch, Angew. Chem. Int. Ed. 42 (2003) 4908). Der Kohlenstoff stammt in diesem Fall vom Fällungsmittel und ist vermutlich relativ gleichmäßig im Volumen verteilt (Volumen-Dotierung).

Die GB 1 022 621 offenbart ein Verfahren zum Mahlen von Titandioxidpigment unter Zugabe verschiedener organischer Substanzen beispielsweise in einer Strahlmühle.
Die EP 0 298 122 A1 offenbart ebenfalls ein Verfahren zur Oberflächenbehandlung von pigmentärem Titandioxid in einer Strahlmühle.
Die EP 0 963 789 A2 offenbart die Herstellung eines porösen TiO₂-Photokatalysators, der durch Calcinierung eines TiO₂-Sols, das eine organische Substanz enthält, hergestellt wurde. Die organische Substanz wird bei der Calcinierung verflüchtigt und hinterlässt Poren.

Der Nachteil der bekannten photokatalytischen Materialien liegt darin, dass die Verfahren zu deren Herstellung nicht für eine großtechnische Herstellung geeignet sind. Die Verfahren sind entweder aus technischen Gründen nicht in den Großmaßstab umsetzbar oder sie wären dann nicht mehr wirtschaftlich. Außerdem zeigen die meisten der erhaltenen Produkte eine unzureichende photokatalytische Aktivität beim Schadstoffabbau im sichtbaren Licht im Bereich von λ ≥ 400 nm und nur eine geringe lichtinduzierte Erhöhung der Hydrophilie.

Zudem sind die Produkte bislang lediglich auf ihre photokatalytischen Eigenschaften hin optimiert. Die Farbe und Helligkeit, d.h. die optischen Eigenschaften sind bislang außer Acht gelassen worden. Der Einsatz eines sehr hellen vlp-TiO2 mit geringer Eigenfarbe und hoher photokatalytischer Aktivität besitzt dagegen Vorteile bei allen Anwendungen, die keine oder nur eine geringe Eigenfarbe des vlp-TiO₂ tolerieren, wie z. B. bei Einsatz in Beschichtungsstoffen, speziell in Farben, Lacken und Putzen.

Der Erfindung liegt die Aufgabe zugrunde, einen tageslichtaktiven, hochwirksamen Photokatalysator auf Basis eines mit Kohlenstoff modifizierten Titandioxids bereitzustellen und ein wirtschaftliches Verfahren zu seiner Herstellung anzugeben.

Erfindungsgemäß wird die Aufgabe gelöst durch einen kohlenstoffhaltigen Photokatalysator auf der Basis von Titandioxid mit einer Lichtabsorption im Bereich von λ > 400 nm enthaltend Titandioxidpartikel mit einer spezifischen Oberfläche nach BET 100 bis 250 m²/g und mit einem Kohlenstoffgehalt im Bereich von 0,05 bis 4 Gew.-% bezogen auf TiO₂, wobei sich der Kohlenstoffgehalt nur in einer Oberflächenschicht der Titandioxidpartikel befindet.
Die Aufgabe wird weiterhin durch ein Herstellungsverfahren gelöst, bei dem eine Titanverbindung, die eine spezifische Oberfläche von mindestens 50 m²/g nach BET (Brunauer-Emmett-Teller) aufweist, mit einer kohlenstoffhaltigen Substanz innig vermischt und die Mischung bei einer Temperatur von bis zu 400 °C thermisch behandelt wird. Weitere vorteilhafte Ausgestaltungen der Erfindung sind in den Unteransprüchen angegeben

### Produkt

Das erfindungsgemäße vlp-TiO₂ zeigt eine höhere photokatalytische Wirksamkeit als die im Stand der Technik beschriebenen Typen. Als Maß der photokatalytischen Wirksamkeit (im folgenden als "Photoaktivität" bezeichnet) dient der Abbau von 4-Chlorphenol durch eine definierte Menge vlp-TiO₂ bei 120 minütiger Bestrahlung mit Licht der Wellenlänge ≥ 455 nm. Die Messmethode ist unten im Detail beschrieben. Unter den genannten Messbedingungen liegt die Photoaktivität des erfindungsgemäßen vlp-TiO₂ bei mindestens 20%, bevorzugt bei mindestens 40% insbesondere bei mindestens 50%.
Der Kohlenstoffgehalt liegt im Bereich von 0,05 bis 4 Gew.-% bezogen auf TiO₂, bevorzugt 0,05 bis 2,0 Gew.-% und besonders bevorzugt 0,3 bis 1,5 Gew.-%. Beste Ergebnisse werden bei Kohlenstoffgehalten von 0,4 bis 0,8 Gew.-% erzielt.
Die Titandioxidpartikel enthalten nur in einer Oberflächenschicht Kohlenstoff und werden deshalb im folgenden als "Kohlenstoff-modifiziert" bezeichnet - im Gegensatz zu dem volumendotierten, gemäß Sakthivel und Kisch (2003) hergestellten Titandioxid. Der Kohlenstoff bzw. die Kohlenstoffverbindungen des erfindungsgemäßen vlp-TiO₂ sind vermutlich in erster Linie kovalent über Sauerstoff auf der TiO₂-Oberfläche gebunden und alkalisch auslaugbar.
Der Photokatalysator kann zusätzlich oder alternativ Stickstoff und/oder Schwefel enthalten. Das erfindungsgemäße vlp-TiO₂ absorbiert im Gegensatz zu unmodifiziertem TiO₂ sichtbares Licht der Wellenlänge λ ≥ 400 nm. Dabei beträgt die der Absorbanz proportionale Kubelka-Munk-Funktion F(R_{∞}) bei 500 nm etwa 50% und bei 600 nm etwa 20% des Wertes bei 400 nm.

Das Elektronenspinresonanzspektrum (ESR) des erfindungsgemäßen vlp-TiO₂, gemessen bei einer Temperatur von 5 K, ist gekennzeichnet durch ein starkes Signal bei einem g-Wert von 2,002 bis 2,004 insbesondere 2,003. Im Bereich der g-Werte 1,97 bis 2,05 treten keine weiteren Signale auf. Die Intensität des Signals bei g etwa 2,003 verstärkt sich durch Bestrahlung mit Licht der Wellenlänge λ ≥ 380 nm (UV-freie 100W Halogenlampe, Kaltlichtfilter KG5) gegenüber der Messung bei Dunkelheit.
Das Röntgen-Photoelektronenspektrum (XPS) des erfindungsgemäßen vlp-TiO₂ ist gekennzeichnet durch das Auftreten einer starken Absorptionsbande bei einer Bindungsenergie von 285,6 eV bezogen auf die O1s-Bande bei 530 eV.
Charakteristisch ist weiterhin, dass das vlp-TiO₂ im Gegensatz zu dem Photokatalysator nach Sakthivel & Kisch (2003) weder im Röntgen-Photoelektronenspektrum (XPS) noch im Infrarotspektrum Carbonatbanden zeigt.
Unter Bestrahlung mit sichtbarem Licht weist das vlp-TiO₂ einen Wasser-Kontaktwinkel von etwa 8° auf, unmodifiziertes TiO₂ zeigt dagegen ein Kontaktwinkel von etwa 21°.

Der neue Photokatalysator ermöglicht einen Schadstoffabbau nicht nur mit artifiziellem sichtbarem Licht, sondern auch mit diffusem Tageslicht von Innenräumen. Er kann zum Abbau von Verunreinigungen und Schadstoffen in Flüssigkeiten oder Gasen, insbesondere in Wasser und Luft, verwendet werden.
Der Photokatalysator kann vorteilhaft auf verschiedene Träger wie Glas (normal und verspiegelt), Holz, Fasern, Keramik, Beton, Baustoffe, SiO₂, Metalle, Papier und Kunststoffe als dünne Schicht aufgebracht werden. Zusammen mit der einfachen Herstellung eröffnen sich dadurch Anwendungsmöglichkeiten in vielfältigen Bereichen wie z. B. in der Bau-, Keramik- und Fahrzeugindustrie für selbstreinigende Oberflächen oder in der Umwelttechnik (Klimageräte, Geräte zur Luftreinigung und Luftsterilisierung und bei der Wasserreinigung, insbesondere Trinkwasser beispielsweise für antibakterielle und antivirale Zwecke).
Der Photokatalysator kann in Beschichtungen für den Innen- und Außenbereich wie z.B. Farben, Putzen, Lacken und Lasuren für die Applikation auf Mauerwerk, Putzoberflächen, Anstrichen, Tapeten und Holz-, Metall-, Glas- oder Keramikoberflächen oder auf Bauteilen wie beispielsweise Wärmedämmverbundsystemen und vorgehängten Fassadenelementen Einsatz finden, sowie in Straßenbelägen und in Kunststoffen, Kunststoff-Folien, Fasern und Papier. Der Photokatalysator kann darüber hinaus bei der Produktion von Betonfertigteilen, Beton-Pflastersteinen, Dachziegeln, Keramik, Fliesen, Tapeten, Geweben, Panelen und Verkleidungselementen für Decken und Wände im Innen- und Außenbereich verwendet werden.
Durch die lichtinduzierte Erhöhung der Hydrophilie der TiO₂-Oberfläche ergeben sich weitere Anwendungen wie z. B. beschlagfreie Spiegel und Fenster im Sanitärbereich oder in der Fahrzeug- und Bauindustrie.
Der Photokatalysator eignet sich weiterhin zur Verwendung in Photovoltaikzellen und zur Wasserspaltung.

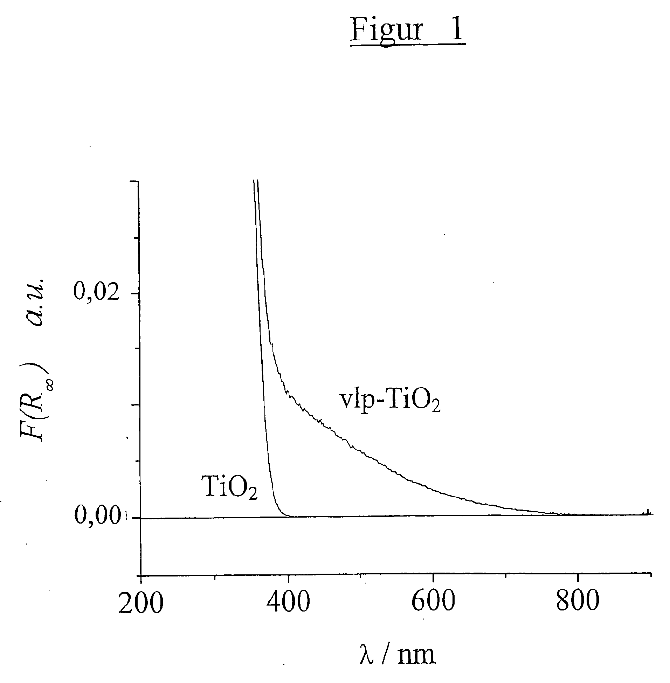

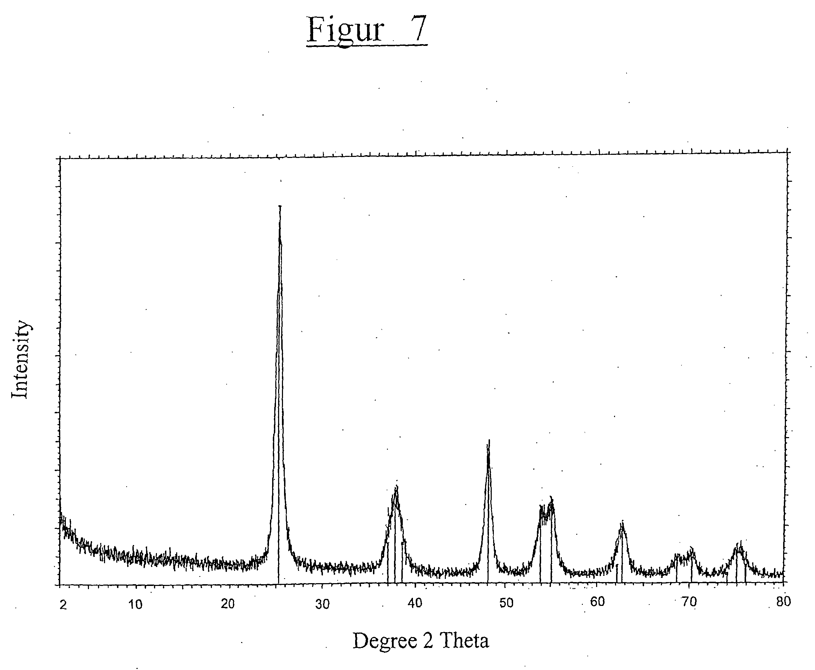

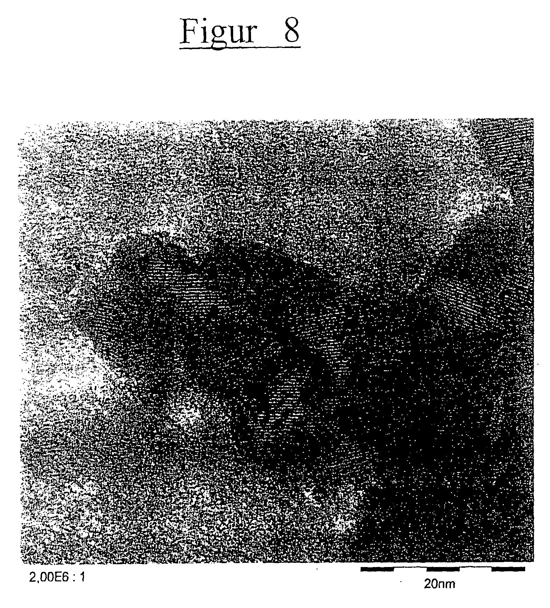

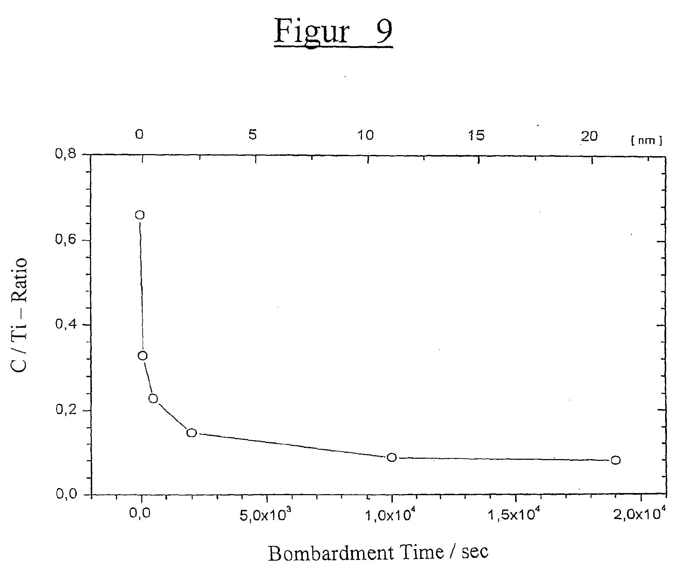

Das erfindungsgemäße vlp-TiO₂ wird nachstehend unter Bezugnahme auf die Figuren 1 bis 9 näher beschrieben.
Figur 1 zeigt die der relativen Absorbanz proportionale Kubelka-Munk-Funktion F(R_{∞}) (willkürliche Einheiten) für unmodifiziertes TiO₂ und für mit C modifiziertes TiO₂ (vlp-TiO₂) als Funktion der Wellenlänge und lässt erkennen, dass das vlp-TiO₂ im Unterschied zu unmodifiziertem Titandioxid im sichtbaren Spektralgebiet absorbiert. F(R_{∞}) beträgt bei 500 nm etwa 50% und bei 600 nm etwa 20 % des Wertes bei 400 nm.

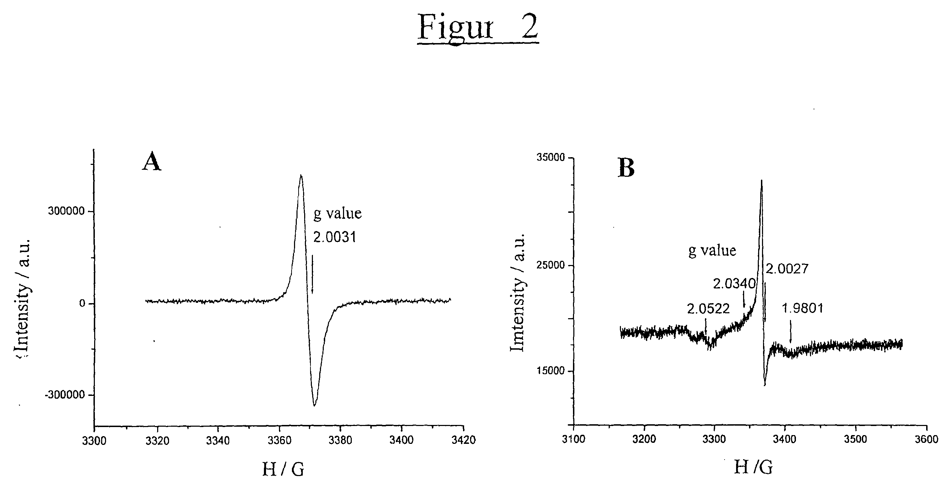

Figur 2 zeigt die Elektronenresonanzspektren (ESR) des erfindungsgemäßen vlp-TiO₂ (Spektrum A) und des nach Sakthivel & Kisch hergestellten TiO₂ (Spektrum B), aufgenommen bei Dunkelheit und bei einer Temperatur von 5 K. Spektrum A zeigt lediglich ein signifikantes Signal bei einem g-Wert von 2,003. Spektrum B zeigt zusätzlich zu einem Hauptsignal bei g etwa 2,003 drei weitere Signale im Bereich der g-Werte 1,97 bis 2,05.

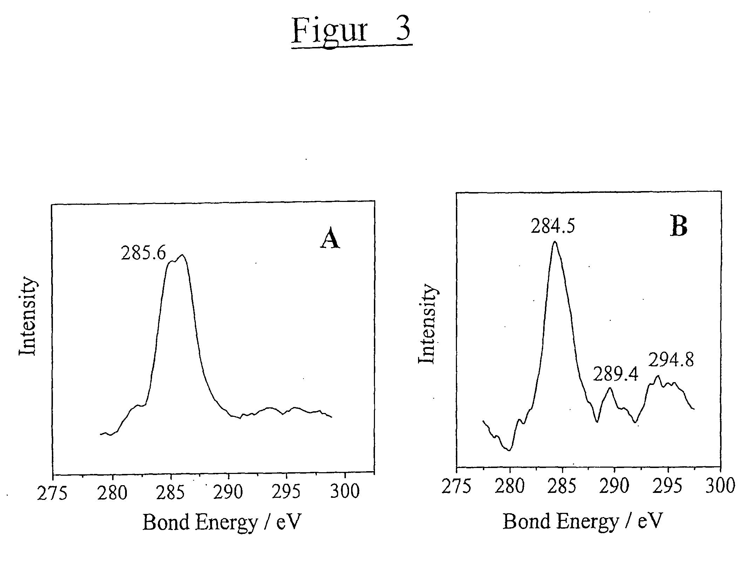

Figur 3 enthält die Röntgen-Photoelektronenspektren (XPS) des erfindungsgemäßen vlp-TiO₂ (Spektrum A) und des schon bekannten, aus Titantetrachlorid mit Tetrabutylammoniumhydroxid ausgefällten TiO₂ nach Sakthivel & Kisch (Spektrum B). Das Spektrum des vlp-TiO₂ weist ein ausgeprägtes C1s-Signal bei einer Bindungsenergie von 285,6 eV bezogen auf die O1s-Absorptionsbande bei 530 eV auf, das auf elementaren Kohlenstoff hinweist. Spektrum B zeigt dagegen C1s-Signale für elementaren Kohlenstoff bei einer Bindungsenergie von 284,5 eV sowie zusätzlich Banden bei 289,4 eV und 294,8 e.V, die auf Carbonat deuten. Auch entsprechende IR-Spektren weisen typische Carbonatbanden bei 1738, 1096 und 798 cm⁻¹ auf.

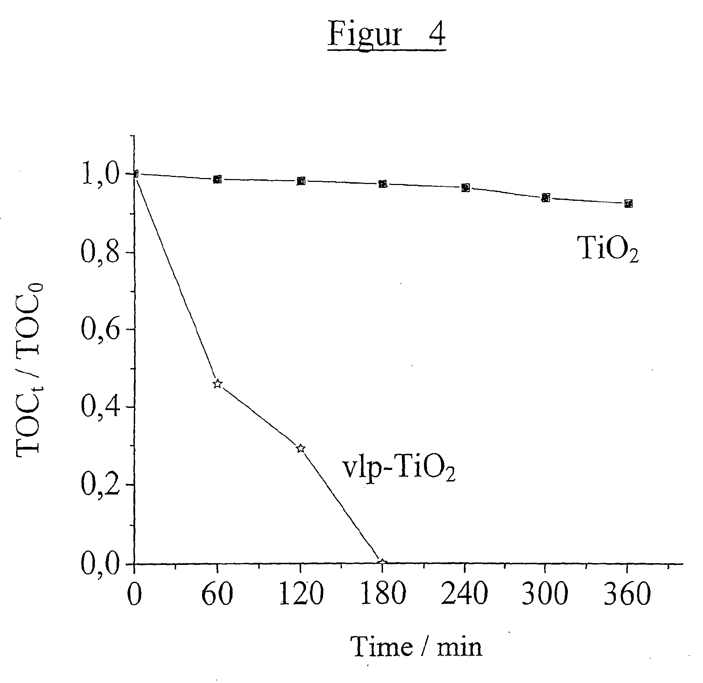

Figur 4 illustriert die photokatalytische Wirksamkeit von vlp-TiO₂ gegenüber unmodifiziertem TiO₂ bei dem Abbau von 4-Chlorphenol (als 2,5 x 10⁻⁴ molare wässrige Lösung) durch artifizielles sichtbares Licht (λ ≥ 455 nm). Dargestellt wird die Abnahme des Gesamtgehalts an organischem Kohlenstoff (TOCₜ) in der Lösung im Verhältnis zum Anfangswert (TOC₀). Mit dem vlp-TiO₂ erfolgt ein vollständiger Abbau nach 3 Stunden.

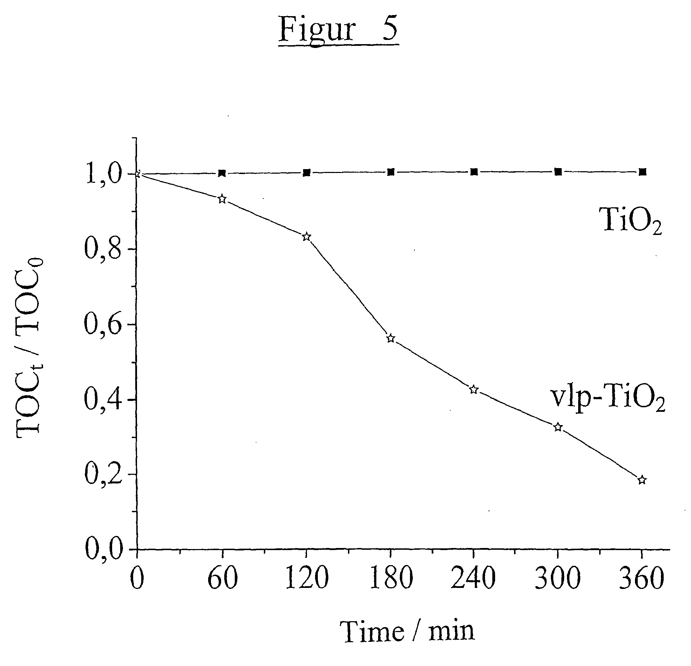

Figur 5 illustriert die photokatalytische Wirksamkeit von vlp-TiO₂ gegenüber unmodifiziertem TiO₂ bei dem Abbau von 4-Chlorphenol (als 2,5 x 10⁻⁴ molare wässrige Lösung) durch das diffuse Tageslicht eines Innenraums. Dargestellt wird die Abnahme des Gesamtgehalts an organischem Kohlenstoff (TOCₜ) in der Lösung im Verhältnis zum Anfangswert (TOC₀). Selbst unter intensitätsschwachen diffusen Tageslicht (7 bis 10 W/m² im Bereich von 400 bis 1200 nm) bewirkt das vlp-TiO₂ innerhalb von sechs Stunden einen 80%igen Abbau. Selbst bei sehr intensitätsschwachem diffusen Tageslicht (1,6 bis <1 W/m²) zeigt das vlp-TiO₂ im Gegensatz zu handelsüblichen TiO₂-Photokatalysatoren (Degussa P25, Kemira UV-Titan, Sachtleben Hombikat, Tayca MT-100SA) noch signifikante Photoaktivität. Die Messung der Abbaurate von 2,5 x 10⁻⁴ molarer 4-Chlorphenol-Lösung erfolgte wie oben beschrieben.
a) Lichtintensität: 1.6 W/m²; Dauer: 12 h

| Katalysator | BET-Oberfläche | Abbaurate |
|---|---|---|
| vlp-TiO₂ | 170 m²/g | 16% |
| P25 | 50 m²/g | 4% |
| UV-Titan | 20 m²/g | 5% |
| Hombikat | 240 m²/g | 9% |
| MT-100SA | 50 m²/g | 5% |

b) Lichtintensität : < 1 W/m² : Dauer : 24 h

| Katalysator | BET-Oberfläche | Abbaurate |
|---|---|---|
| vlp-TiO₂ | 170 m²/g | 18 % |
| Hombikat | 240 m²/g | 3 % |

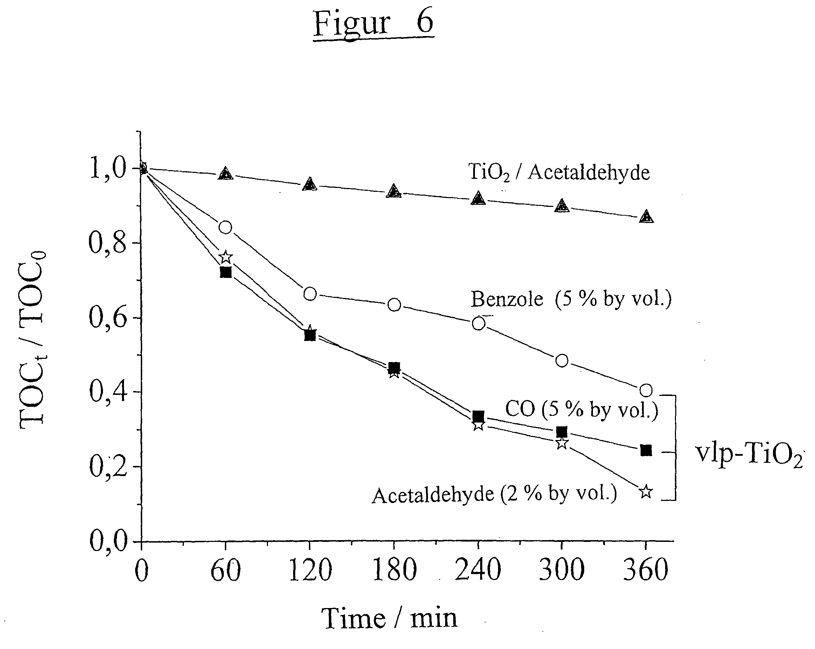

Figur 6 illustriert die photokatalytische Wirksamkeit von vlp-TiO₂ gegenüber unmodifiziertem TiO₂ bei dem Abbau von Benzol (5 Vol.-%), Acetaldehyd (2 Vol.-%) und Kohlenmonoxid (5 Vol.-%) durch das diffuse Tageslicht eines Innenraums. Als Reaktionsgefäß dient ein 1 Liter-Rundkolben, bestückt mit einem mit 12 mg Titandioxid beschichteten Papier-Rundfilter (d = 15 cm). Dargestellt wird die Abnahme des Gesamtgehalts an organischem Kohlenstoff (TOCₜ) in der Atmosphäre im Verhältnis zum Anfangswert (TOCₒ). Die Kurven zeigen den Abbau von Benzol, Acetaldehyd bzw. Kohlenmonoxid durch das erfindungsgemäße vlp-TiO₂ sowie den Abbau von Acetaldehyd durch unmodifiziertes Titandioxid.
Figur 7 zeigt ein Röntgenpulverdiffraktogramm des vlp-TiO₂, das nur Anatas-Reflexe aufweist. Die nach der Scherrer-Methode berechnete Kristallitgröße liegt bei 10 nm.
Figur 8 zeigt eine mittels hochauflösender Elektronenmikroskopie (HTEM) erstellte Aufnahme von vlp-TiO₂ mit den Gitterlinien der Kristallite. Die Kristallitgröße lässt sich auf eine Größenordnung von 10 nm abschätzen.
Figur 9 gibt ein Kohlenstoff-Tiefenprofil des vlp-TiO₂ wieder, dargestellt als C/Ti-Verhältnis. Es wurde mittels lonenbeschuss (Ar⁺) und ESCA-Analyse bestimmt. Die angegebene Beschusszeit von 5x10³ Sekunden entspricht einer Tiefe von etwa 5 nm.

### Herstellung

Das erfindungsgemäße Verfahren geht von einer Titanverbindung aus, die in Form eines amorphen, teilkristallinen oder kristallinen Titanoxids bzw. wasserhaltigen Titanoxids und/oder eines Titanhydrats und/oder Titanoxyhydrats vorliegt und die im folgenden als Ausgangstitanverbindung bezeichnet wird.
Die Ausgangstitanverbindung kann beispielsweise bei der Titandioxidherstellung entweder nach dem Sulfatverfahren oder nach dem Chloridverfahren erzeugt werden. Titanhydrat bzw. Titanoxyhydrat oder Metatitansäure wird z.B. bei der Hydrolyse von Titanylsulfat oder Titanylchlorid gefällt.

Die Ausgangstitanverbindung kann als feinkörniger Feststoff oder in Suspension mit einem entsprechenden Feststoffanteil von mindestens 15 Gew.-% vorliegen, wobei die spezifische Oberfläche des Feststoffs mindestens 50 m²/g nach BET, bevorzugt etwa 150 bis 350 m²/g nach BET, insbesondere 150 bis 250 m²/g nach BET beträgt.
Für die industrielle Umsetzung des erfindungsgemäßen Verfahrens wird aus wirtschaftlichen Gründen als Ausgangstitanverbindung Titanhydrat aus dem Sulfatprozess bevorzugt. Dieses Titanhydrat wird vorteilhafterweise zuvor durch Neutralisieren und Waschen von anhaftender Schwefelsäure befreit, so dass der Sulfatanteil des Feststoffs nach Trocknung < 1 Gew.-% gerechnet als SO₃ beträgt.

Die kohlenstoffhaltige Substanz hat eine Zersetzungstemperatur von höchstens 400°C, besser < 350°C, vorzugsweise < 300°C. Als geeignet haben sich kohlenstoffhaltige Substanzen wie z.B. Holz, Ruß oder Aktivkohle und insbesondere organische Kohlenstoffverbindungen wie Kohlenwasserstoffe mit mindestens einer funktionellen Gruppe erwiesen. Die funktionelle Gruppe kann sein: OH; CHO; COOH; NHₓ; SHₓ; COOR, wobei R ein Alkyl- oder Arylrest ist. Es kommen beispielsweise Bernsteinsäure, Glyzerin oder Ethylenglykol in Frage. Es können auch Zucker oder andere Kohlenhydrate eingesetzt werden, ebenso Organoammoniumhydroxide, insbesondere Tetraalkylammonium. Geeignet sind auch Mischungen der genannten Verbindungen. Vorzugsweise werden wasserlösliche Polyalkohole mit einem Kohlenstoff/Sauerstoff-Verhältnis von etwa 0,7 bis 1,5, bevorzugt von etwa 1 verwendet, insbesondere Pentaerythrit. Die Kohlenstoffverbindung kann als Feststoff oder als Lösung oder als Suspension eingesetzt werden.
Die organische Kohlenstoffverbindung sollte eine möglichst hohe Affinität zur Oberfläche der Ausgangstitanverbindung aufweisen, um eine innige Verbindung mit dieser eingehen zu können.

Die Ausgangstitanverbindung wird mit der organischen Kohlenstoffverbindung innig gemischt in der Weise, dass eine Oberflächenbelegung der Ausgangstitanverbindung mit der Kohlenstoffverbindung stattfindet. Die organische Kohlenstoffverbindung kann dabei physisorbiert oder chemisorbiert an der Oberfläche der Ausgangstitanverbindung vorliegen. Die Belegung der Oberfläche der Ausgangstitanverbindung kann durch Lösen der Kohlenstoffverbindung in der Suspension der Ausgangstitanverbindung oder durch Vermischen der Suspension der Kohlenstoffverbindung mit der Suspension der Ausgangstitanverbindung stattfinden. Ein intensives Mischen der Kohlenstoffverbindung mit einer zuvor getrockneten pulverförmigen Ausgangstitanverbindung ist ebenfalls möglich. Im Falle des Einsatzes von Titanhydrat kann die Kohlenstoffverbindung alternativ auch bereits bei der Herstellung des Titanhydrats der zu hydrolysierenden Lösung beigemischt werden. In der fertigen Mischung aus Ausgangstitanverbindung und Kohlenstoffverbindung beträgt die Menge der Kohlenstoffverbindung bezogen auf die Ausgangstitanverbindung (als Feststoff) 1 bis 40 Gew.-%.
Liegt die fertige Mischung als Suspension vor, kann diese vor der weiteren Verarbeitung zu einem pulverförmigen Feststoff getrocknet werden. Dazu bieten sich bekannte Verfahren wie Sprühtrocknung oder Wirbelschichttrocknung an.
Die fertige und gegebenenfalls vorgetrocknete Mischung wird thermisch bei Temperaturen von maximal 400 °C behandelt. Die thermische Behandlung wird in oxidierender Atmosphäre bevorzugt in Luft oder in einer Sauerstoff-Luftmischung durchgeführt. Dabei kommt es zur Zersetzung der organischen Kohlenstoffverbindung an der Oberfläche der Ausgangstitanverbindung und zur Freisetzung von H₂O, CO₂ und CO. Obwohl die thermische Behandlung auch im - diskontinuierlichen - Chargenbetrieb beispielsweise in einem handelsüblichen Laborofen stattfinden kann, wird aus wirtschaftlichen Gründen ein kontinuierlicher Prozess, bei dem ein bestimmtes Temperaturprofil gefahren werden kann, bevorzugt. Als kontinuierliche Verfahren kommen alle Verfahren in Frage, mit denen ein entsprechendes Temperaturprofil und die notwendige Verweilzeit realisierbar sind. Besonders geeignete Aggregate sind indirekt und direkt beheizte Drehrohröfen. Es können auch kontinuierlich betriebene Fließbettreaktoren, Wirbelschichttrockner und beheizte Pflugscharmischer eingesetzt werden. Die drei letztgenannten Aggregate können auch in diskontinuierlicher Fahrweise betrieben werden.

Die thermische Behandlung wird so durchgeführt, dass ein Produkt (vlp-TiO₂) mit einem Kohlenstoffgehalt von 0,05 bis 4,0 Gew.-%, bevorzugt 0,05 bis 2,0 Gew.-%, besonders bevorzugt 0,3 bis 1,5 Gew.-% und insbesondere 0,4 bis 0,8 Gew.-% entsteht. Im Verlaufe der thermischen Behandlung findet ein Farbwechsel von weiß auf braun und schließlich.auf beige statt. Das Endprodukt zeichnet sich durch eine beige bis leicht gelblichbräunliche Färbung aus. Es ist charakterisiert dadurch, dass der Kohlenstoff in amorphen und polykristallinen Bereichen der Oberflächenschicht wie auch an der Oberfläche selbst detektierbar ist. Das Produkt ist im sichtbaren Licht photoaktiv.

Nach der thermischen Behandlung wird das Produkt mit bekannten Verfahren deagglomeriert, beispielsweise in einer Stiftmühle, Strahlmühle oder Gegenstrahlmühle. Bei pulverförmigen vorgetrockneten Mischungen führt die thermische Behandlung meist zu agglomeratfreien Produkten, die keiner weiteren Mahlung bedürfen. Die zu erzielende Kornfeinheit hängt von der Korngröße der Ausgangstitanverbindung ab. Die Kornfeinheit oder spezifische Oberfläche des Produkts liegt nur geringfügig niedriger, aber in der gleichen Größenordnung wie die des Edukts. Die angestrebte Kornfeinheit des Photokatalysators hängt von dem Einsatzbereich des Photokatalysators ab. Sie liegt üblicherweise im Bereich wie bei TiO₂-Pigmenten, kann aber auch darunter oder darüber liegen. Die spezifische Oberfläche nach BET liegt bei 100 bis 250 m²/g, vorzugsweise 130 bis 200 m²/g, insbesondere 130 bis 170 m²/g.

### Beispiele

Die Erfindung wird anhand der folgenden Beispiele genauer beschrieben, ohne dass dadurch der Umfang der Erfindung eingeschränkt werden soll.

### Beispiel 1:

Eine wässrige Titanoxyhydrat-Paste (35 Gew.-% Feststoff) hergestellt nach dem Sulfatverfahren wird mit destilliertem Wasser bei Raumtemperatur soweit verdünnt, dass eine rührfähige Suspension entsteht. Der Feststoffanteil liegt bei 20 bis 25 %. Es wird soviel NaOH-Lösung (36 Gew.-%) zugegeben, bis sich ein pH-Wert zwischen 6,0 und 7,0 einstellt. Die Suspension wird anschließend filtriert und mit destilliertem Wasser gewaschen, bis der am getrockneten Rückstand gemessene SO₃-Gehalt unter 1 Gew.-% liegt.

Das auf diese Weise neutralisierte und gewaschene Titanoxyhydrat wird anschließend nochmals zu einer rührfähigen Suspension (25 % Feststoff) mit destilliertem Wasser verdünnt und 12 Gew.-% Bernsteinsäure bezogen auf den Feststoff zugegeben. Die Bernsteinsäure wird der Suspension als Feststoff zugegeben und die Suspension solange gerührt, bis sich die Bernsteinsäure vollständig gelöst hat. Die Suspension wird zur Verbesserung der Löslichkeit der Bernsteinsäure auf etwa 60°C erwärmt. Die in dieser Weise präparierte Suspension wird unter einem Oberflächenverdampfer (IR-Strahler) unter Rühren soweit getrocknet, bis aus der Suspension eine pastöse Masse entsteht. Die pastöse Masse wird in einem Labortrockenschrank anschließend bei 150°C solange getrocknet, bis der Feststoffanteil > 98% beträgt.

300 g der getrockneten Titanoxyhydrat/Bernsteinsäure-Mischung werden fein zerkleinert (z. B. durch Mörsern und Sieben) und das erhaltene Pulver in einer Quarzschale mit Deckel bei 290°C in einen Laborofen gestellt. In Abständen von 1 bis 2 Stunden wird die Quarzschale entnommen und das Pulver nochmals gemischt. Nach 13 bis 15 Stunden im Laborofen hat sich die Farbe des Pulvers von anfänglich gelblich über grau-schwarz nach gelblich-braun geändert. Die thermische Behandlung zum vlp-TiO₂ ist abgeschlossen, wenn der Kohlenstoffgehalt von anfänglich 5 bis 5,5 Gew.-% auf etwa 0,65 bis 0,80 Gew.-% abgenommen hat.

Anschließend wird der Photokatalysator deagglomeriert und auf Kohlenstoffgehalt, optische Eigenschaften, BET-Oberfläche und Photoaktivität analysiert.

### Beispiel 2

Analoges Vorgehen wie in Beispiel 1 mit dem Unterschied, dass 12 Gew.-% Pentaerythrit als Feststoff der Titanoxyhydrat-Suspension zugegeben werden.

### Beispiel 3

Analoges Vorgehen wie in Beispiel 2 mit dem Unterschied, dass 5 Gew.-% Pentaerythrit als Feststoff der Titanoxyhydrat-Suspension zugegeben werden.

### Beispiel 4

Es wird eine Titanoxyhydrat/Pentaerythrit-Suspension unter Einsatz von 5 Gew.-% Pentaerythrit hergestellt wie in Beispiel 1 beschrieben. In Abwandlung von Beispiel 1 wird die thermische Behandlung der so erhaltenen Suspension in einem kontinuierlich betriebenen Drehrohrofen wie folgt durchgeführt:
Der Drehrohrofen wird im Gegenstromverfahren betrieben und über einen Gasbrenner direkt beheizt. Die offene Flamme des Gasbrenners ist durch ein Flammrohr geschützt und
verhindert so einen direkten Kontakt mit dem Produkt (vlp-TiO₂). Die beheizte Ofenlänge beträgt 7 m und der lichte Durchmesser 0,3 m. Die Suspension wird im Eintrag des Ofens fein versprüht. Die Aufgabemenge der Suspension beträgt 40 kg/h. Ketteneinbauten im Eintrag des Ofens sorgen für eine gute Verwirbelung und damit für eine rasche Trocknung und anschließende Zerkleinerung des getrockneten Materials. Die Durchlaufzeit durch den kontinuierlich betriebenen Drehrohrofen beträgt 1 Stunde. Die Ofentemperatur im Auslaufbereich wird über die Gasmenge am Brenner auf 260°C geregelt. Am Ofenauslauf fällt das vlp-TiO₂ als feines Pulver mit einer gelblich-braunen Farbe an. Anschließend wird das vlp-TiO₂ in einem Labormixer (Braun, MX 2050) deagglomeriert und auf Kohlenstoffgehalt, optische Eigenschaften, BET-Oberfläche und Photoaktivität analysiert.

### Beispiel 5

Analoges Vorgehen wie in Beispiel 4 mit dem Unterschied, dass die Ofentemperatur im Auslaufbereich über die Gasmenge am Brenner auf 280°C geregelt wird.

### Beispiel 6

Es wird eine Titanoxyhydrat/Pentaerythrit-Suspension unter Einsatz von 5 Gew.-% Pentaerythrit hergestellt wie in Beispiel 1 beschrieben. In Abwandlung von Beispiel 1 wird die Suspension zu einem pulverförmigen Feststoff mit einem Restfeuchtegehalt von 22 % in einem elektrisch beheizten Ofen vorgetrocknet. Die thermische Behandlung des vorgetrockneten pulverförmigen Einsatzmaterials wird in einem kontinuierlich betriebenen indirekt beheizten Drehrohrofen wie folgt durchgeführt:
Der Drehrohrofen wird im Gleichstromverfahren betrieben und elektrisch in drei Zonen beheizt. Die gesamt beheizte Ofenlänge beträgt 2700 mm und der lichte Durchmesser 390 mm. Der pulverförmige Feststoff wird über eine Dosierschnecke in den Eintrag des Ofens gefördert. Ketteneinbauten über die gesamte Länge des Drehrohrs sorgen für eine homogene Verteilung im Ofen und verhindern Anbackungen an der Ofenwand. Die Aufgabemenge beträgt 25 kg Feststoff pro Stunde. Die Durchlaufzeit durch den kontinuierlich betriebenen Drehrohrofen beträgt 0,5 Stunden. Die Ofentemperatur wird in drei Heizzonen elektrisch geregelt. Die Temperatur jeder der drei Heizzonen ist individuell regelbar. Am Ofenauslauf fällt das vlp-TiO₂ als beige-gefärbtes feines Pulver an. Anschließend wird das vlp-TiO₂ in einem Labormixer (Braun, MX 2050) deagglomeriert und auf Kohlenstoffgehalt, optische Eigenschaften, BET-Oberfläche und Photoaktivität analysiert.

### Gegenbeispiel

Ein TiO₂-Pigment (Anatas) mit einer BET-Oberfläche von etwa 10 m²/g (Handelsprodukt Kronos 1000) wird analog Beispiel 2 mit 12 % Pentaerythrit versetzt und thermisch behandelt.

| Beispiel | Organik | Thermische Behandlung | | Analytik des vlp-TiO₂ | | | | | Photoaktivität |
|---|---|---|---|---|---|---|---|---|---|
| | | °C | Zeit (h) | C-Gehalt | PLV-Test | | | BET | Abbau von 4-CP in 120 min. (%) |
| | | | | (%) | L* | b* | a* | m²/g | |
| 1 | Bernsteinsäure | 290 | 13 | 0,79 | 85,4 | 9,85 | 1,63 | 164 | 48 |
| 2 | Pentaerythrit | 290 | 28 | 0,75 | 86,9 | 10,08 | 1,53 | 158 | 50 |
| 3 | Pentaerythrit | 290 | 10 | 0,76 | 83,7 | 10,03 | 1,59 | 140 | 63 |
| 4 | Pentaerythrit | 260* | 1** | 0,92 | 85,1 | 11,7 | 1,2 | 152 | 58 |
| 5 | Pentaerythrit | 280* | 1** | 0,50 | 85,8 | 9,4 | 2,2 | 160 | 68 |
| 6 | Pentaerythrit | 300*** | 0,5** | 0,78 | 83,0 | 11,0 | 2,6 | 167 | 86 |
| Gegenbeispiel | Pentaerythrit | 290 | 42 | 0,82 | 74,7 | 9,12 | 2,50 | 11,6 | < 5 |

| | | | | | | | | | |
|---|---|---|---|---|---|---|---|---|---|
| * Maximale Temperatur, gemessen am Austrag des Drehrohrofens ** Durchlaufzeit des Aufgabeguts durch den Drehrohrofen *** Temperatur der drei Heizzonen, gemessen im Bereich der Heizelemente | | | | | | | | | |

In der Tabelle sind Analytik und Photoaktivität des erfindungsgemäßen vlp-TiO₂ zusammengestellt.
Aus Titanhydrat hergestelltes vlp-TiO₂ (Beispiele 1 bis 6) zeigt bei guten optischen Werten (PLV-Test) eine hervorragende photokatalytische Wirksamkeit im sichtbaren Spektralbereich. Die Verwendung von Anatas-Pigment anstelle von Titanhydrat als Ausgangstitanverbindung führt zu einem Produkt ohne nennenswerte Photoaktivität (Gegenbeispiel).

### Beispiel 7

5 g Titandioxid (Handelsprodukt TRONOX Titanhydrat-0 der Firma Kerr-McGee Pigments GmbH) werden bei Raumtemperatur in 20 ml destilliertem Wasser suspendiert, mit 5 ml Ethylenglykol (Handelsprodukt der Firma FLUKA AG) versetzt und 30 min im Ultraschallbad (Sonorex Super RK 106 der Firma Bandelin Electronic, Berlin; 35 kHz, 120 W eff. Hf-Leistung) behandelt. Nach magnetischem Rühren über Nacht wird das Lösungsmittel vorzugsweise im Vakuum entfernt, der Rückstand bei 100 bis 200 °C, vorzugsweise bei etwa 200 °C mindestens 12 Stunden getrocknet, danach innerhalb einer Stunde in einem geschlossenen Gefäß auf 300 °C erhitzt und darauf drei weitere Stunden auf dieser Temperatur gehalten. Dabei ist ein Farbwechsel des Pulvers von weiß über dunkelbraun nach beige festzustellen. Längeres Erhitzen führt zu farblosen, inaktiven Pulvern.

Die Elementaranalyse des Produkts ergibt 2,58 Gew.-% Kohlenstoff, 0,02 Gew.-% Stickstoff und 0,40 Gew.-% Wasserstoff. Unmodifiziertes TiO₂ enthält 0,07 Gew.-% C und 0,0 Gew.-% N und 0,0 Gew.-% H.

### Beispiel 8

Zur Ablösung der oberflächigen Kohlenstoffverbindung werden 5 g vlp-TiO₂ über Nacht in 100 ml einer 2 M Natronlauge (pH 12) gerührt. Durch Zentrifugieren wird ein braungelber Extrakt und ein kaum gefärbter weißlicher Rückstand erhalten, letzterer wird bei 100 °C getrocknet. Das so erhaltene Pulver zeigt beim Abbau von 4-Chlorphenol im sichtbaren Licht keine Aktivität. Wird das Pulver mit dem Extrakt wieder vereinigt und etwas erwärmt, vorzugsweise auf etwa 200 °C, besitzt es in der Abbaureaktion die gleiche Aktivität wie das unbehandelte (nicht-gelaugte) vlp-TiO₂.

### Beispiel 9

Zur Beschichtung einer Kunststoff-Folie wird ein nach den Beispiel 6 hergestelltes Pulver im Ultraschallbad in einer Flüssigkeit wie Methanol oder Ethanol suspendiert und die resultierende Suspension mittels einer Sprühflasche möglichst dünn auf die Folie aufgebracht. Nach anschließender Trocknung bei 343 K kann die Beschichtung bis zum Erreichen der gewünschten Schichtdicke wiederholt werden.
Anstelle der Kunststoff-Folie kann ein anderer Träger wie z. B. Papier (siehe Versuch gem. Figur 6) oder Aluminium (siehe unter Testmethoden h): "dip-coating") verwendet werden.

### Messmethoden

### a) Bestimmung der optischen Werte (PLV-Test)

Die Methode dient zur Ermittlung der optischen Werte Helligkeit L*, Ton a* und Ton b* des vlp-TiO₂. Aus dem zu testenden vlp-TiO₂ wird unter definierten Bedingungen mit einer hydraulischen Kleinpresse der Firma MATRA, Frankfurt ein Pulverpressling hergestellt. Mit dem HUNTERLAB Tristimulus Colorimeter werden anschließend an dem Pulverpressling die Remissionswerte bestimmt.

Das vlp-TiO₂ wird vor der Herstellung des Presslings gemahlen. 100 g des erhaltenen vlp-TiO₂ wird dazu in einen handelsüblichen Mixer (Hersteller: Braun, Modell: MX 2050) gegeben und 12 mal 5 sec. gemahlen. Zwischen jedem Mahlschritt wird der Mixer geöffnet und das Pulver nochmals durchgemischt. Auf eine Bodenplatte mit kreisförmiger Vertiefung legt man ein auf beiden Seiten mattes weißes Blatt Papier und drückt mit der Presse einen Metallring (Höhe 4 cm, Durchmesser 2,4 cm) in die Vertiefung. Etwa 25 g des gemahlenen vlp-TiO₂ werden unter leichtem Schütteln und Klopfen in den Metallring gegeben. Mit einem Druck von 2 - 3 kN wird das Pulver zusammengepresst. Der Pressvorgang wird ein zweites Mal bis zum Erreichen des angestrebten Betriebsdruckes von 15 kN wiederholt.

Durch vorsichtiges Drehen und Ziehen des Metallringes trennt man diesen von der Bodenplatte. Das Papier zwischen Bodenplatte und Ring wird entfernt. Im Ring befindet sich nun der Pressling, der für den Messvorgang am HUNTERLAB Colorimeter verwendet wird. Die Messwerte L*, a*, b* werden am Colorimeter direkt abgelesen.

### b) Bestimmung der Photoaktivität (Schadstoffabbau)

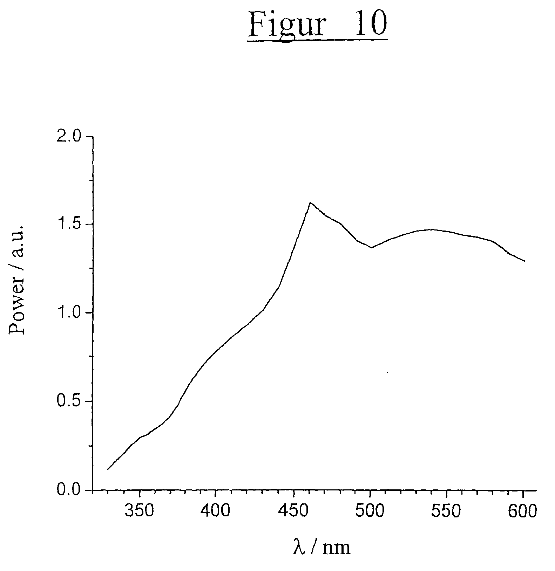

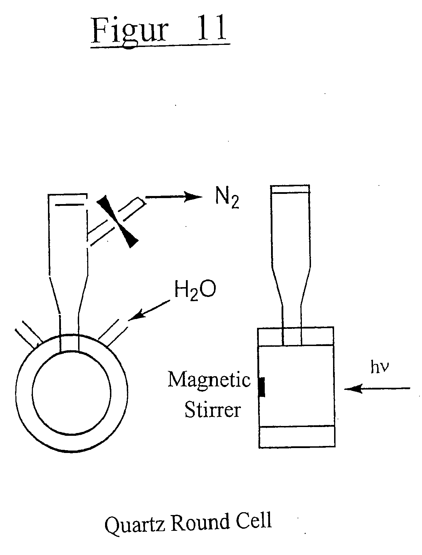

In artifiziellem sichtbaren Licht:
15 mg des vlp-TiO₂ werden in 15 ml einer 2,5 x 10⁻⁴ molaren Lösung von 4-Chlorphenol 10 Minuten im Ultraschallbad dispergiert und anschließend in einer wassergekühlten Rundküvette auf einer optischen Bank belichtet. Die Belichtungen zur Bestimmung der Photoaktivität erfolgen mit einer in einem fokussierenden Lampengehäuse (AMKO Mod. A1020, Brennweite 30 cm) installierten Osram XBO 150 W Xenon - Kurzbogenlampe. Das Spektrum dieser Lampe ist in Figur 10 abgebildet. Die Reaktionen werden in einer 15 ml fassenden, wassergekühlten Rundküvette mit einem Innendurchmesser von 30 mm und einer Schichtdicke von 20 mm durchgeführt. Die Reaktionssuspension kann mit einem seitlich angebrachten Rührmotor und Rührmagneten gerührt werden. Die Rundküvette ist in Figur 11 abgebildet. Die Küvette wird im Brennpunkt der Lampe fixiert. Das Licht wird so fokussiert, dass nur der Reaktionsraum der Küvette bestrahlt wird. Alle Bestandteile werden auf einer optischen Bank fest montiert. Zur Eliminierung von UV-Licht wird in den Strahlengang ein Kantfilter (Fa. Schott) eingebracht, dessen Durchlässigkeit bei λ ≥ 455 nm liegt. Zur Verhinderung einer möglichen Aufheizung des Reaktionsraumes durch die Belichtung wird zusätzlich ein IR-Filter in den Strahlengang montiert. Dabei handelt es sich um einen mit Wasser gefüllten Zylinder (Durchmesser 6 cm, Länge 10 cm).

Die Abnahme der Konzentration an 4-Chlorphenol wird mittels UV-Spektroskopie (λ = 224 nm) oder im Falle des Abbaus (Oxidation) über Messung des Gesamtgehalts an organischem Kohlenstoff (TOC-Wert) verfolgt.

Im diffusen Tageslicht eines Innenraums:
50 mg des vlp-TiO₂ werden in 50 ml einer 2,5 x10⁻⁴ molaren Lösung von 4-Chlorphenol 10 Minuten im Ultraschallbad dispergiert und anschließend in einem Erlenmeyerkolben (100 ml) unter Rühren dem Tageslicht in einem Innenraum ausgesetzt.

Abbau von Acetaldehydgas, Benzoldampf und Kohlenmonooxid:
In einem mit luftgesättigtem Acetaldehydgas (2 Vol.-%) oder mit Benzoldampf (5 Vol.-%) oder mit Kohlenmonoxid gefüllten Rundkolben (1 l) werden zwei mit dem vlp-TiO₂ beidseitig beschichtete Rundfilter (Papier, d = 15 cm, 12 mg Katalysator pro Filter) eingebracht.
Anschließend wird der Kolben im Laboratorium dem Tageslicht ausgesetzt und die Abnahme der Schadstoffe und die Bildung von Kohlendioxid mittels IR-Spektroskopie verfolgt.

### c) Bestimmung des Kohlenstoffgehalts

### Die Bestimmung erfolgt als gesamter organischer Kohlenstoffgehalt (TOC) mit dem

Kohlenstoffanalysator LECO C-200. Die Messmethode basiert auf der Verbrennung der im TiO₂ enthaltenden organischen Substanz im Induktionsofen unter Sauerstoffgas und der anschließenden Bestimmung des sich bildenden Kohlendioxids mittels IR-Detektion. Die Einwaage TiO₂ beträgt ca. 0,4 g.

### d) Bestimmung der spezifischen Oberfläche nach BET (Brunauer-Emmett-Teller)

### Die BET-Oberfläche wird mit einem Tristar 3000 der Fa. Micromeritics nach dem statisch

volumetrischen Prinzip gemessen.

### e) XPS-Messungen

Zur Messung der Bindungsenergien wurde das Gerät Phi 5600 ESCA Spektrometer (pass energy of 23,50 eV; Al standard; 300,0 W; 45,0°) verwendet.

### f) ESR-Messungen

Zur Messung der Elektronenresonanzspekren wurde ein Bruker Elexys 580 Spektrometer X-band (9,5 GHz) verwendet. Die Probe wurde bis 10⁻⁵ Torr evakuiert, mit Helium bis zu einem Druck von 10⁻² Torr gefüllt und anschließend abgeschmolzen. Die Messung erfolgte unter folgenden Bedingungen:
Magnetfeld mit 100 Hz moduliert. RF power: 0,0002 -1 mW. Field: 3340 - 3500 G. Sweep Width: 100 - 500 G. Conversion Time: 81,92 ms. Time constant: 40,96 ms. Modifizierte Amplitude: 0,2 - 13 G, Temperatur: 5 K. Der g-Wert wird mittels einer Hall-Sonde bestimmt.

### g) Messung der diffusen Reflektionsspektren (Kubelka-Munk-Funktion)

Die diffusen Reflektionsspektren der Pulver wurden mit einem Shimadzu UV-2401 PC UV/Vis-Spektrometer gemessen, welches mit einer Ulbrichtkugel ausgestattet war. Als Weiss-Standard diente Bariumsulfat, mit dem die Pulver vor der Messung in einem Mörser verrieben wurden. Die Kubelka-Munk-Funktion ist proportional zur Absorbanz.

### h) Superhydrophile Eigenschaften

### Zur Messung des Kontaktwinkels von Wasser wurde jeweils vlp-TiO₂ und unmodifiziertes

TiO₂ in destilliertem Wasser suspendiert, durch "dip coating" auf ein 5 x 5 cm großes Aluminiumplättchen aufgebracht und 1 Stunde bei 400 °C calciniert. Nach Aufbewahren im Tageslicht wurden für unmodifiziertes Titandioxid ein Kontaktwinkel von 21° gemessen, für vlp-TiO₂ dagegen nur 8°. Der Kontaktwinkel für das unbeschichtete Aluminiumplättchen betrug 91°.

## Patentansprüche

1. Kohlenstoffhaltiger Photokatalysator auf der Basis von Titandioxid mit einer Lichtabsorption im Bereich von λ > 400 nm enthaltend Titandioxidpartikel mit einer spezifischen Oberfläche nach BET von 100 bis 250 m²/g und mit einem Kohlenstoffgehalt im Bereich von 0,05 bis 4 Gew.-% bezogen auf TiO₂, wobei sich der Kohlenstoffgehalt nur in einer Oberflächenschicht der Titandioxidpartikel befindet.

2. Photokatalysator nach Anspruch 1 **gekennzeichnet dadurch,**
**dass** die der Absorbanz proportionale Kubelka-Munk-Funktion F (R_{∞}) bei 500 nm etwa 50 % und bei 600 nm etwa 20 % des Wertes bei 400 nm beträgt.

3. Photokatalysator nach Anspruch 1 oder 2 **dadurch gekennzeichnet,**
**dass** sein Kohlenstoffgehalt im Bereich von 0,05 bis 2,0 Gew.-%, bevorzugt von 0,3 bis 1,5 Gew.-% und insbesondere bevorzugt von 0,4 bis 0,8 Gew.-% bezogen auf TiO₂ liegt.

4. Photokatalysator nach einem oder mehreren der Ansprüche 1 bis 3 **dadurch gekennzeichnet,**
**dass** die spezifische Oberfläche nach BET 100 bis 250 m²/g bevorzugt 130 bis 200 m²/g bevorzugt insbesondere 130 bis 170 m²/g beträgt.

5. Verfahren zur Herstellung eines kohlenstoffhaltigen, im sichtbaren Licht photoaktiven Titandioxids nach Anspruch 1 **dadurch gekennzeichnet,**
**dass** eine Titanverbindung, die eine spezifische Oberfläche von mindestens 50 m²/g nach BET aufweist, mit einer organischen Kohlenstoffverbindung innig vermischt und die Mischung bei einer Temperatur von bis zu 400 °C thermisch behandelt wird.

6. Verfahren nach Anspruch 5 **dadurch gekennzeichnet,**
**dass** die Titanverbindung ein amorphes, teilkristallines oder kristallines Titanoxid bzw. wasserhaltiges Titanoxid oder ein Titanhydrat oder ein Titanoxyhydrat ist.

7. Verfahren nach Anspruch 5 oder 6 **dadurch gekennzeichnet,**
**dass** die kohlenstoffhaltige Substanz eine Zersetzungstemperatur von höchstens 400 °C bevorzugt < 350 °C und insbesondere bevorzugt < 300 °C aufweist.

8. Verfahren nach einem oder mehreren der Ansprüche 5 bis 7 **dadurch gekennzeichnet,**
**dass** die kohlenstoffhaltige Substanz ein Kohlenwasserstoff ist, der wenigstens eine funktionelle Gruppe enthält.

9. Verfahren nach einem oder mehreren der Ansprüche 5 bis 8 **dadurch gekennzeichnet,**
**dass** die thermische Behandlung in einem kontinuierlich zu betreibenden Calcinieraggregat bevorzugt in einem Drehrohrofen oder im Wirbelbett durchgeführt wird.

10. Verfahren nach einem oder mehreren der Ansprüche 5 bis 9 **dadurch gekennzeichnet,**
**dass** die thermische Behandlung in oxidierender Atmosphäre bevorzugt in Luft oder in einer Sauerstoff-Luftmischung durchgeführt wird.

11. Verfahren nach einem oder mehreren der Ansprüche 5 bis 10 **dadurch gekennzeichnet,**
**dass** vor der thermischen Behandlung eine separate Vortrocknung beispielsweise in einem Sprühtrockner oder einem Wirbelbett-Trockner stattfindet.

12. Verwendung des Photokatalysators nach einem oder mehreren der Ansprüche 1 bis 11 als dünne Schicht auf Glas, Holz, Fasern, Keramik, Beton, Baustoffen, SiO₂, Metallen, Papier und Kunststoffen.

13. Verwendung des Photokatalysators nach einem oder mehreren der Ansprüche 1 bis 11 in Kunststoffen, Kunststoff-Folien, Fasern, Papier und Straßenbelägen.

14. Verwendung des Photokatalysators nach einem oder mehreren der Ansprüche 1 bis 11 in der Bauindustrie bei der Produktion von Bauteilen, insbesondere bei der Produktion von Betonfertigteilen, Beton-Pflastersteinen, Dachziegeln, Keramik, Fliesen, Tapeten, Geweben, Panelen und Verkleidungselementen für Decken und Wände im Innen- und Außenbereich, und in der Fahrzeugindustrie.

15. Verwendung des Photokatalysators nach einem oder mehreren der Ansprüche 1 bis 11 in Klimaanlagen, in Apparaten zur Luftreinigung und Luftsterilisierung, bei der Wasserreinigung insbesondere zu antibakteriellen oder antiviralen Zwecken, in Photovoltaikzellen und zur Wasserspaltung.

## Claims

1. Carbon-containing photocatalyst based on titanium dioxide, displaying light absorption in the range of λ > 400 nm, containing titanium dioxide particles with a specific surface area according to BET of 100 to 250 m²/g and having a carbon content in the range from 0.05 to 4% by weight, referred to TiO₂, where the carbon content is located only in a surface layer of the titanium dioxide particles.

2. Photocatalyst according to Claim 1, **characterised in that**,
compared to the value at 400 nm, the Kubelka-Munk function F (R_{∞}), which is proportional to the absorbency, is roughly 50% at 500 nm and roughly 20% at 600 nm.

3. Photocatalyst according to Claim 1 or 2, **characterised in that**
its carbon content is in the range from 0.05 to 2.0% by weight, preferably from 0.3 to 1.5% by weight, and particularly preferably from 0.4 to 0.8% by weight, referred to TiO₂.

4. Photocatalyst according to one or more of Claims 1 to 3, **characterised in that** the specific surface area according to BET is 100 to 250 m²/g, preferably 130 to 200 m²/g, particularly preferably 130 to 170 m²/g.

5. Method for manufacturing a carbon-containing titanium dioxide that is photoactive in visible light according to Claim 1, **characterised in that**
a titanium compound having a specific surface area of at least 50 m²/g according to BET is mixed intimately with an organic carbon compound, and the mixture is treated thermally at a temperature of up to 400 °C.

6. Method according to Claim 5, **characterised in that**
the titanium compound is an amorphous, semicrystalline or crystalline titanium oxide, or hydrous titanium oxide, or a titanium hydrate or a titanium oxyhydrate.

7. Method according to Claim 5 or 6, **characterised in that**
the carbon-containing substance has a decomposition temperature of max. 400 °C,
preferably < 350 °C, and particularly preferably < 300 °C.

8. Method according to one or more of Claims 5 to 7, **characterised in that** the carbon-containing substance is a hydrocarbon containing at least one functional group.

9. Method according to one or more of Claims 5 to 8, **characterised in that** the thermal treatment is performed in a continuously operating calcining unit, preferably in a rotary kiln or a fluidised bed.

10. Method according to one or more of Claims 5 to 9, **characterised in that** the thermal treatment is performed in an oxidising atmosphere, preferably in air or an oxygen/air mixture.

11. Method according to one or more of Claims 5 to 10, **characterised in that** the thermal treatment is preceded by separate predrying, e.g. in a spray drier or a fluidised-bed drier.

12. Use of the photocatalyst according to one or more of Claims 1 to 11 as a thin layer on glass, wood, fibres, ceramics, concrete, building materials, SiO₂, metals, paper and plastics.

13. Use of the photocatalyst according to one or more of Claims 1 to 11 in plastics, plastic sheeting, fibres, paper and road surfacings.

14. Use of the photocatalyst according to one or more of Claims 1 to 11 in the construction industry for the production of building components, particularly in the production of prefabricated concrete elements, concrete paving stones, roof tiles, ceramics, decorative tiles, wallpapers, fabrics, panels and cladding elements for ceilings and walls in indoor and outdoor areas, and in the automotive industry.

15. Use of the photocatalyst according to one or more of Claims 1 to 11 in air-conditioning systems, devices for air purification and air sterilisation, in the purification of water, particularly for antibacterial or antiviral purposes, in photovoltaic cells and for water splitting.

## Revendications

1. Photocatalyseur contenant du carbone, à base de dioxyde de titane avec une absorption de lumière dans le domaine λ > 400 nm, contenant des particules de dioxyde de titane avec une surface spécifique selon la méthode BET de 100 à 250 m²/g et une teneur en carbone dans la gamme de 0,05 à 4 % en poids par rapport à TiO₂, où la teneur en carbone se situe uniquement dans une couche superficielle des particules de dioxyde de titane.

2. Photocatalyseur selon la revendication 1, **caractérisé en ce que** la fonction de Kubelka-Munk proportionnelle à l'absorbance F(R_{∞}) se situe à 500 nm à environ 50 % et à 600 nm à environ 20 %, de la valeur à 400 nm.

3. Photocatalyseur selon les revendications 1 ou 2, **caractérisé en ce que** la teneur en carbone se situe dans la gamme de 0,05 à 2,0 % en poids, de préférence de 0,3 à 1,5 % en poids et de manière particulièrement préférée de 0,4 à 0,8 % en poids, par rapport à TiO₂.

4. Photocatalyseur selon une ou plusieurs des revendications 1 à 3, **caractérisé en ce que**
la surface spécifique selon la méthode BET se situe de 100 à 250 m²/g, de préférence de 130 à 200 m²/g, de manière particulièrement préférée de 130 à 170 m²/g.

5. Procédé de fabrication d'un dioxyde de titane contenant du carbone, photoactif dans la lumière visible selon la revendication 1 **caractérisé en ce que** un composé à base de titane qui présente une surface spécifique d'au moins 50 m²/g selon la méthode BET est mélangé intimement avec un composé carboné organique et le mélange est traité thermiquement à une température jusqu'à 400 °C.

6. Procédé selon la revendication 5, **caractérisé en ce que**
le composé à base de titane est un oxyde de titane amorphe, partiellement cristallin ou cristallin, respectivement un oxyde de titane contenant de l'eau ou un hydrate de titane, ou un oxyhydrate de titane.

7. Procédé selon les revendications 5 ou 6, **caractérisé en ce que** la substance contenant du carbone présente une température de décomposition d'au maximum 400 °C, de préférence < 350 °C et de manière particulièrement préférée < 300 °C.

8. Procédé selon une ou plusieurs des revendications 5 à 7, **caractérisé en ce que** la substance contenant du carbone est un hydrocarbure qui contient au moins un groupe fonctionnel.

9. Procédé selon une ou plusieurs des revendications 5 à 8, **caractérisé en ce que** le traitement thermique est réalisé de préférence dans un four rotatif ou sur un lit fluidisé fonctionnant en continu activant la formation d'un agrégat calciné.

10. Procédé selon une ou plusieurs des revendications 5 à 9, **caractérisé en ce que** le traitement thermique est réalisé dans une atmosphère oxydante, de préférence dans l'air ou dans un mélange oxygène-air.

11. Procédé selon une ou plusieurs des revendications 5 à 10, **caractérisé en ce que** avant le traitement thermique, un pré-séchage séparé, par exemple dans un séchoir par pulvérisation ou dans un séchoir à lit fluidisé a lieu.

12. Utilisation du photocatalyseur selon l'une ou plusieurs des revendications 1 à 11 en tant que couche mince sur du verre, du bois, des fibres, de la céramique, du béton, des matériaux de construction, de la SiO₂, des métaux, du papier et des matières plastiques.

13. Utilisation du photocatalyseur selon l'une ou plusieurs des revendications 1 à 11 dans des matières plastiques, des films en matière plastique, des fibres, du papier et des revêtements routiers.

14. Utilisation du photocatalyseur selon une ou plusieurs des revendications 1 à 11 dans l'industrie du bâtiment lors de la production d'éléments pour le bâtiment, notamment dans la production d'éléments préfabriqués en béton, de pavés de béton, de tuiles, de céramique, de carrelages, de tapisseries, de textiles, de panneaux et d'éléments d'habillage pour des plafonds et des murs dans les domaines intérieur et extérieur, et dans l'industrie automobile.

15. Utilisation du photocatalyseur selon une ou plusieurs des revendications 1 à 11 dans des installations de climatisation, dans des appareils pour l'assainissement de l'air et la stérilisation de l'air, dans l'assainissement de l'eau, notamment à des fins antibactériennes ou antivirales, dans des cellules photovoltaïques et pour le fractionnement de l'eau.
